# EUROPEAN PATENT APPLICATION

(11) **EP 1 168 137 A1**
(43) Date of publication of application: **02.01.2002**
(21) Application number: 01112947.5
(22) Date of filing: 06.06.2001
(51) Int. Cl.: G06F 1/00, G06K 7/00, G11B 20/00

(54) **Smart card reader with usb interface for connection to personal computers and the like**

(30) Priority: 23.06.2000 IT MI001425
(71) Applicant: IPM-NET S.p.A., 80022 Arzano (Prov. of Napoli) (IT)
(72) Inventor: Della Valle, Stefano, 20043 Arcore (IT)
(74) Representative: Modiano, Guido, Dr.-Ing.

(57) **Abstract**

A smart card reader (1) suitable to be connected to a personal computer, comprising at least one connector (3) adapted to be connected to a communication port of the computer and at least one smart card which, when activated, is suitable to enable a communication between the reader (1) and the personal computer, in order to allow a user to access an application program installed on the personal computer.

## Description

The present invention relates to a smart card reader with USB interface, for connection to personal computers and the like.

It is known that software houses need to copy-protect their programs, which require hundreds of man-hours to be developed.

Illegal copying of programs is one of the factors that leads to extremely high costs for software. Accordingly, it seems absolutely necessary for software houses to find a system which allows them to avoid fraudulent duplication of said programs.

Currently, one of the most widely used systems consists in providing electronic keys which are generally connected to the parallel port of the computer; without said keys, the software program does not run.

Such electronic keys are hardware components dedicated expressly to an appropriately provided computer and/or program, since they have wiring which corresponds to the hardware structure of the computer proper and to software control functions.

Accordingly, one of the drawbacks suffered by hardware keys thus conceived is that they are expressly dedicated to a single computer, so that they cannot be used on different computers and cannot be reprogrammed in any way.

Another drawback of conventional electronic keys is that an expert in the field can duplicate the hardware configuration of the electronic key and therefore bypass the protection devised by the software house for its program.

Moreover, conventional electronic keys cannot be personalized by the user; it is therefore impossible to determine unequivocally whether the user who is using the key is the one who is authorized to do so.

Accordingly, for example if the electronic key is lost, anyone can use a given program already installed on a personal computer, with the dedicated key.

This of course entails a fault in data security, since the user has no assurance that his program cannot be run in any way by unauthorized individuals, since operation is entrusted exclusively to the electronic key, which if lost can be used by anyone on the personal computer on which said program is installed.

The aim of the present invention is to provide a smart card reader with USB interface which allows to connect to the personal computer an electronic key for enabling the operation of a given software program or of the entire personal computer and in which the smart card is able to interact with the control application or software installed on the computer.

Within this aim, an object of the present invention is to provide a smart card reader with USB interface for connection to a personal computer which is provided with means for unequivocal identification of the user, capable of enabling the operation of a given software application or of the entire system only if the user who is using the smart card reader is the one who is actually authorized to do so.

Another object of the present invention is to provide a smart card reader which allows to use the same reader on different personal computers without the need to install appropriate software.

Another object of the present invention is to provide a smart card reader for connection to a personal computer and the like which is highly reliable, and be relatively simple to manufacture and at competitive costs.

This aim and these and other objects which will become better apparent hereinafter are achieved by a smart card reader suitable for connection to a personal computer, characterized in that it comprises at least one connector adapted to be connected to a communication port of said computer and at least one smart card which, when activated, is suitable to enable a communication between the reader and the personal computer, in order to allow a user to access an application program installed on such personal computer.

Further characteristics and advantages of the present invention will become better apparent from the description of preferred but not exclusive embodiments of the smart card reader according to the present invention, illustrated only by way of non-limitative example in the accompanying drawings, wherein:

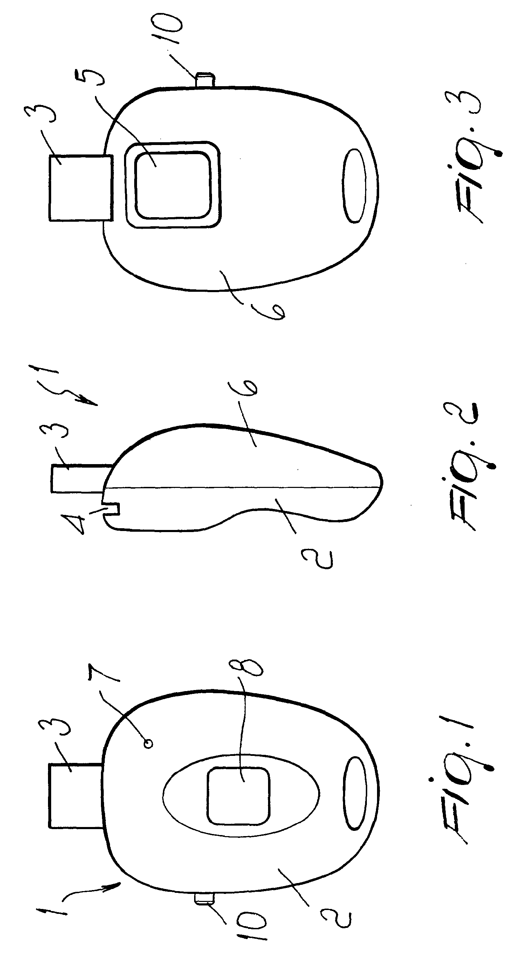

Figure 1 is a top plan view of the card reader according to the present invention;
Figure 2 is a side view of the device of Figure 1;
Figure 3 is a bottom plan view of the card reader according to the present invention; and
Figure 4 is a block diagram of the card reader according to the present invention.

With reference to the figures, the smart card reader according to the present invention, generally designated by the reference numeral 1, comprises an external container 2 which has, in a protruding position, a connector 3, preferably of the USB type, for connection to a standard port of a personal computer or the like.

The body 2 has, in an upward region and below the connector 3, at least one slot 4 which allows to insert a smart card 5 in which the application program for communication with the personal computer is stored.

Conveniently, the container 2 can be provided, in a downward region, with a window 6 which allows to view the smart card 5 inserted in the slot 4.

Preferably, the smart card can be of the SIM (Subscriber Identity Module) type.

Moreover, the smart card reader 1 is preferably provided with at least one LED 7 which is suitable to indicate to the user that a correct connection is present, by means of the USB connector 3, between the reader 1 and the personal computer.

Access to the personal computer or to an application running on the personal computer is enabled by the smart card 5 without further interaction by the user or, if provided by the system, by entering a PIN (Personal Identification Number) by means of the keyboard of the personal computer.

Accordingly, in this first embodiment of the reader according to the invention, the smart card 5 allows to perform an advanced interaction with the software application installed on the personal computer. In particular, a portion of the application program installed on the personal computer can be stored on the smart card, so that if the reader 1 is not present the program that is present on the personal computer is completely unusable because part of it is missing.

A second embodiment of the reader according to the present invention provides, instead of entering the PIN to enable the smart card, or alternatively in addition thereto, an internal enabling function by direct identification of the user by the reader 1.

For this purpose sensor means 8 are provided, which are arranged for example at the upper face of the container 1, by which it is possible to detect the print of one of the user's fingers, for example the thumb.

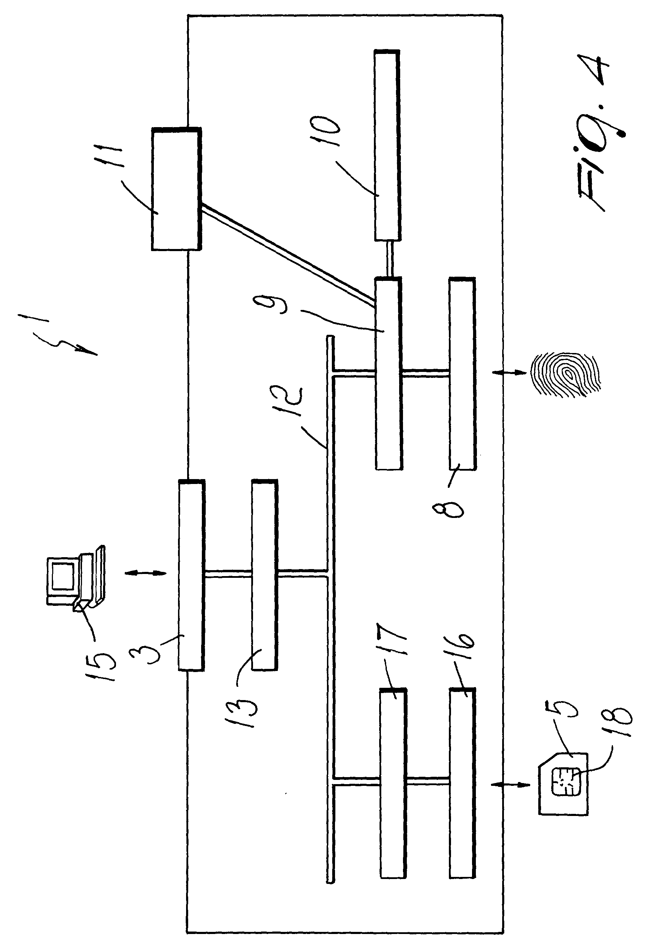

Figure 4 illustrates, as a block diagram, a possible implementation of the reader according to the present invention.

In this block diagram, the sensor means 8 is connected to microprocessor means 9, which are in turn connected to memory means 10. In this case, the memory means 10 contain the user's fingerprint, which is compared in each instance, by the microprocessor means 9, with the print left by the user on the sensor means 8 by resting his finger on said sensor means.

Accordingly, access to the smart card is enabled, in this manner, thanks to a method which allows to ensure the inviolability of the system.

In fact it is known that fingerprints cannot be duplicated and therefore recognition of the user's fingerprint by the sensor means 8 gives the user the assurance that the reader cannot be used fraudulently.

In this case, therefore, it would be possible to avoid the need to memorize a PIN and enter it each time in order to access the functions of the smart card 5.

Since the information (data) related to the fingerprints of the owner of the reader 1 are stored in the reader itself, and more specifically in the memory means 10, they cannot be accessed in any way.

Since security is ensured by elements which are all contained in the reader according to the invention, it can be transferred from one personal computer to another and used by a same user regardless of the workstation, without the need to install appropriate software for each different key on each specific personal computer.

A third embodiment of the smart card reader according to the present invention provides for the addition of application or identification selection means 11 which, by being moved to different positions, allow to enable a corresponding number of PINs.

The application selection means 11 are associated with the sensor means 8; therefore, once the user's fingerprint has been recognized, the PIN that corresponds to the position indicated by the selection means 11 is sent to the smart card 5.

This allows to use different smart cards 5, each with its own specific PIN, or a multiple-application smart card, in which each application has a separate PIN which can be selected by the selection means 11.

The selection means 11 are operatively connected to the microprocessor means 9, as already shown in Figure 4; such means are in turn connected to an internal bus 12, which connects the microprocessor means 9 to the sensor means 8, to the memory means 10 and to second microprocessor means 13, which control the connection means 3 which allow the connection of the reader 1 to the USB serial port of a personal computer 15.

The reference numeral 5 (Figure 4) illustrates, like in the preceding figures, the smart card, inserted in a smart card reader, which is designated by the reference numeral 16 and is accommodated in the container 2 and connected to a driver 17 of the smart card 5, being in turn connected to the internal bus 12 of the reader.

The second microprocessor means 13 are adapted to handle communication toward the personal computer 15, while the smart card 5 has an additional microprocessor, schematically designated by the reference numeral 18 for the sake of simplicity, which is adapted to interface the first and second microprocessor means 9 and 13 with the smart card 5.

With reference to the above cited figures, the operation of the reader according to the invention is as follows.

First of all, an initialization step is performed; during this step, after connecting the reader 1 to the USB serial port of the computer 15, by means of the USB connector 3, an appropriate software program interacts with the microprocessor means 9, which compare the fingerprint stored in the memory means 10 with the print of the finger detected by the sensor means 8.

At this point, the software program activates a function for processing the fingerprint by means of the first microprocessor means 9, and if the quality of the detected fingerprint is sufficient, the first microprocessor means 9 send a confirmation message to the software program.

The significant features of the fingerprint are encrypted and stored in the memory means 10.

Finally, the software program communicates a PIN code of the associated smart card 5. The PIN is encrypted and stored.

The PIN for enabling the smart card 5 can be sent, as mentioned, either by manually entering it or by providing for the automatic sending of the PIN by the first microprocessor means 9, after the user's fingerprint has been recognized by the sensor means 8.

In this case, the smart card replies to the unlock request exactly as if the PIN had been entered by means of the keyboard of the personal computer 15.

If the selection means 11 are present, at this point it is possible to select, in each instance, the sending of a chosen PIN, selected by the selection means 11.

In practice it has been observed that the smart card reader according to the invention fully achieves the intended aim and objects, since it allows to provide an electronic security key for a software program and allows, by using a smart card inside it, to store for example part of the program on the smart card itself, to send a smart card activation recognition PIN which accordingly enables communication with the personal computer to which the reader is connected, and to detect an unequivocal distinctive feature of the user, such as his fingerprint, in order to allow him to access the software program installed on the personal computer.

Finally, the possibility of having a smart card in which multiple PINs are stored allows the user, by way of the selection means, to select in each instance the PIN he wants and therefore for example to allow the enabling of a particular software program or to differentiate the user, for example by storing the fingerprints of multiple users on the same reader.

In this manner, the reader according to the invention can be used not only on different personal computers but also for different software programs, allowing to program in each instance the chosen PIN in order to allow communication between the reader and the personal computer, as regards a particular software program to which the user is to be allowed access.

The reader thus conceived is susceptible of numerous modifications and variations, all of which are within the scope of the same inventive concept; all the details may furthermore be replaced with other technically equivalent elements.

In practice, the materials used, as well as the contingent shapes and dimensions, so long as they are compatible with the specific use, may be any according to requirements and to the state of the art.

The disclosures in Italian Patent Application No. MI2000A001425 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A smart card reader suitable for connection to a personal computer, **characterized in that** it comprises at least one connector meant to be connected to a communication port of said computer and at least one smart card which, when activated, is suitable to enable a communication between said reader and said personal computer, in order to allow a user to access an application program installed on said personal computer.

2. The reader according to claim 1, **characterized in that** said connector of said reader is a USB connector, and **in that** said communication port of said personal computer is a USB serial communications port.

3. The reader according to claim 1, **characterized in that** it comprises a container which is suitable to accommodate said at least one smart card, a slot being formed in said container for the insertion of said at least one smart card.

4. The reader according to one or more of the preceding claims, **characterized in that** said container comprises a window which is arranged so as to allow to view said smart card when said smart card is inserted in said slot of the container.

5. The reader according to one or more of the preceding claims, **characterized in that** it comprises first microprocessor means which are connected to memory means and are connected, by way of an internal bus, to second microprocessor means which are suitable to handle the communication between said reader and said personal computer.

6. The reader according to one or more of the preceding claims, **characterized in that** it comprises sensor means which are arranged at the surface of said container and are connected to said first microprocessor means.

7. The reader according to claim 6, **characterized in that** said sensor means comprise at least one fingerprint sensor which is suitable to detect the fingerprint of a user and compare it, through said memory means and said first microprocessor means, with a fingerprint which is stored beforehand in said memory means and unequivocally identifies the authorized user.

8. The reader according to one or more of the preceding claims, **characterized in that** it comprises selection means which are connected to said first microprocessor means and are suitable to select a specific PIN of said at least one smart card.

9. The reader according to one or more of the preceding claims, **characterized in that** said at least one smart card contains part of said software program installed on said personal computer.

10. The reader according to one or more of the preceding claims, **characterized in that** it comprises at least one LED which is suitable to give indications as to the result of the connection between said reader and said personal computer.
